(19) **Europäisches Patentamt / European Patent Office / Office européen des brevets**

(11) **EP 1 678 011 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **04765960.2**

(22) Anmeldetag: **14.10.2004**

(51) Int Cl.:
**B60R 21/013** (2006.01)

(86) Internationale Anmeldenummer:
**PCT/EP2004/011533**

(87) Internationale Veröffentlichungsnummer:
**WO 2005/037610 (28.04.2005 Gazette 2005/17)**

(54) **VERFAHREN ZUR ERZEUGUNG EINES AUSLÖSEZUSAMMENHANGES ZUM AUSLÖSEN EINER INSASSENSCHUTZEINRICHTUNG EINES KRAFTFAHRZEUGES**

METHOD FOR GENERATING A DISCONNECTION FOR TRIGGERING A PASSENGER PROTECTION SYSTEM OF A MOTOR VEHICLE

PROCEDE POUR PRODUIRE UN CONTEXTE DE DECLENCHEMENT POUR DECLENCHER UN SYSTEME DE PROTECTION DE PASSAGERS D'UN VEHICULE AUTOMOBILE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10348997**
**17.10.2003 DE 10348998**
**17.10.2003 DE 10348999**
**31.01.2004 DE 102004004951**

(43) Veröffentlichungstag der Anmeldung:
**12.07.2006 Patentblatt 2006/28**

(73) Patentinhaber:
• **Volkswagen Aktiengesellschaft**
**38436 Wolfsburg (DE)**
• **AUDI AG**
**85045 Ingolstadt (DE)**
• **Andata Entwicklungstechnologie GmbH & Co. KG**
**5400 Hallein (AT)**

(72) Erfinder:
• **KUHN, Andreas**
**A-5440 Kochl (AT)**
• **PALAU MOTINO, Antoni**
**E-08033 Barcelona (ES)**
• **WEISS, Christian**
**85113 Böhmfeld (DE)**
• **NEUBOHN, André**
**38440 Wolfsburg (DE)**

(74) Vertreter: **Geske, Kerstin**
**Volkswagen AG,**
**Patentabteilung EZP,**
**Postfach 1770**
**38436 Wolfsburg (DE)**

(56) Entgegenhaltungen:
DE-A- 10 016 142      DE-A- 10 035 505
DE-A- 10 040 111      DE-A- 19 854 380
DE-C- 10 103 661      US-A- 5 583 771
US-A1- 2002 188 393   US-B1- 6 219 606
US-B1- 6 453 225

EP 1 678 011 B1

**Beschreibung**

Die Erfindung betrifft ein Verfahren zur Erzeugung eines Auslösezusammenhanges zum Auslösen einer Insassenschutzeinrichtung eines Kraftfahrzeuges in Abhängigkeit einer gemessenen Bewegungsgröße des Kraftfahrzeuges. Eine derartige Insassenschutzeinrichtung kann einen Airbag und/oder einen Gurtstraffer umfassen bzw. ein Airbag und/oder ein Gurtstraffer sein.

Airbagsysteme sind z.B. in dem unter der Internetseite
www.informatik.uni-dortmund.de/airbag/seminarphase/hardware_vortrag.pdf
veröffentlichten Artikel "Hardware und Mechanik realer Airbagsteuerungen" offenbart.

Die US 2002/0188393 A1, die die Merkmale des Oberbegriffs des Anspruchs 1 zeigt, offenbart ein Kollisionsschaden-Begrenzungssystem für ein Fahrzeug, mittels dessen die Relativgeschwindigkeit zwischen dem Fahrzeug und einem Objekt gemessen wird.

Die US 5 583 771, die US 5 684 701 und die US 6 532 508 B1 offenbaren die Ansteuerung eines Airbags mittels eines neuronalen Netzes in Abhängigkeit eines Ausgangssignals eines Beschleunigungssensors.

Die DE 198 54 380 A1 offenbart ein Verfahren zum Erkennen der Schwere eines Fahrzeugzusammenstosses, bei dem die Ausgangssignale einer Mehrzahl von Beschleunigungssensoren einem neuronalen Netz zugeführt werden. Bei dem Verfahren wird der Beginn der Auswertung der Ausgangssignale der Beschleunigungssensoren durch ein Triggersignal bestimmt, das von einem Beschleunigungssensor ausgegeben wird, wenn sein Ausgangssignal einen vorgegebenen Schwellwert überschreitet. Dieser Beschleunigungssensor veranlasst die anderen Beschleunigungssensoren, zu ein- und demselben Zeitpunkt das jeweilige Ausgangssignal zu liefern. Es wird weiterhin vorgeschlagen, die Ausgangssignale der Beschleunigungssensoren ein- oder zweimal zu integrieren.

Die DE 100 35 505 A1 offenbart ein Verfahren, bei dem mit Hilfe eines neuronalen Netzes das Ausgangssignal eines Beschleunigungssensors in seinem zukünftigen zeitlichen Verlauf auf der Basis der Beschleunigungssensorsignale zu mindest einem definierten Zeitpunkt vorhergesagt wird.

Aus der DE 100 40 111 A1 ist ein Verfahren zur Bildung einer Auslöseentscheidung für Rückhaltemittel in einem Fahrzeug bekannt, bei dem aus Beschleunigungsmesswerten die Differenz gebildet und anschließend der Betrag der Differenz integriert wird. Das Integral wird mit mindestens einem Schwellwert verglichen. Überschreitet das Integral diesen Schwellwert bis zu einem vorgegebenen Zeitpunkt nicht, so wird die Lage einer Auslöseschwelle für die gemessene Beschleunigung oder für eine daraus abgeleitete Geschwindigkeitsänderung so verändert, dass die Auslöseempfindlichkeit geringer wird.

In der DE 101 03 661 C1 ist ein Verfahren zur Seitenaufprallsensierung in einem Kraftfahrzeug beschrieben, wobei auf der linken und auf der rechten Fahrzeugseite Beschleunigungssensoren angeordnet sind, aus deren Ausgangssignalen die Differenz gebildet wird. Das Differenzbeschleunigungssignal wird integriert oder aufsummiert. Zur Seitenaufprallsensierung wird das Differenzgeschwindigkeitssignal mit einer Schwelle verglichen, die in Abhängigkeit von dem Differenzbeschleunigungssignal gebildet wird.

Es ist Aufgabe der Erfindung, ein Verfahren zur Erzeugung eines verbesserten Auslösezusammenhanges zum Auslösen einer Insassenschutzeinrichtung eines Kraftfahrzeuges bzw. ein Verfahren zum Herstellen eines verbesserten Kraftfahrzeuges, insbesondere ein Verfahren zum Herstellen eines Kraftfahrzeuges mit einem verbesserten Insassenschutzsystem, anzugeben. Dabei ist es besonders wünschenswert, eine besonders präzise Auslösung eines solchen Insassenschutzsystems bzw. einer solchen Insassenschutzeinrichtung für ein Kraftfahrzeug zu gewährleisten.

Vorgenannte Aufgabe wird durch ein Verfahren zur Erzeugung eines Auslösezusammenhanges zum Auslösen einer Insassenschutzeinrichtung eines Kraftfahrzeuges in Abhängigkeit einer gemessenen Bewegungsgröße des Kraftfahrzeuges und/oder eines zeitlichen Mittelwertes der gemessenen Bewegungsgröße gelöst, wobei der Auslösezusammenhang in Abhängigkeit der gemessenen Bewegungsgröße und/oder des zeitlichen Mittelwertes der gemessenen Bewegungsgröße einer Situation erzeugt wird, für die ein Soll-Auslösezeitpunkt der Insassenschutzeinrichtung bekannt ist, wobei jedoch die gemessene Bewegungsgröße und/oder der zeitliche Mittelwert der gemessenen Bewegungsgröße in einem Trainingsunterdrückungs-Zeitintervall vor dem Soll-Auslösezeitpunkt der Insassenschutzeinrichtung, um den Soll-Auslösezeitpunkt der Insassenschutzeinrichtung herum oder nach dem Soll-Auslösezeitpunkt der Insassenschutzeinrichtung bei der Erzeugung des Auslösezusammenhanges unberücksichtigt bleibt.

Eine Insassenschutzeinrichtung im Sinne der Erfindung ist insbesondere ein Airbag und/oder ein Gurtstraffer. Eine Bewegungsgröße des Kraftfahrzeuges im Sinne der Erfindung kann eine Beschleunigung, eine Geschwindigkeit oder ein Weg bzw. eine von diesen Größen abgeleitete Größe sein. Eine Situation, für die ein Soll-Auslösezeitpunkt der Insassenschutzeinrichtung bekannt ist, ist im Sinne der Erfindung insbesondere ein Crashtest.

Ein Crashsensor im Sinne der Erfindung kann ein Beschleunigungssensor zum Messen einer Beschleunigung in eine oder mehrere Richtungen sein. Ein Crashsensor im Sinne der Erfindung kann auch ein Radargerät, eine Infrarotanordnung oder eine Kamera sein. In diesem Fall kann eine Bewegungsgröße des Kraftfahrzeuges ein Abstand des Kraftfahrzeuges zu einem Hindernis, die erste oder zweite Ableitung dieses Abstandes oder eine andere äquivalente Größe sein. Ein Crashsensor im Sinne der Erfindung kann auch ein Sensor zur Messung einer Deformation des Kraftfahrzeuges sein. Ein solcher Sensor kann ein faseroptischer Sensor oder ein in der DE 100 16 142 A1 offenbarter Sensor sein. In diesem Falle kann eine Bewegungsgröße des Kraftfahrzeuges eine Deformation des Kraftfahrzeuges, die erste oder zweite Ableitung dieser Deformation oder eine andere äquivalente Größe sein.

In vorteilhafter Ausgestaltung der Erfindung wird der Auslösezusammenhang zudem in Abhängigkeit des (gewünschten) Soll-Auslösezeitpunktes, insbesondere eines Mindest-Soll-Auslösezeitpunktes, der Insassenschutzeinrichtung erzeugt. Dabei ist ein Mindest-Soll-Auslösezeitpunkt ein Auslösezeitpunkt, in dem die Insassenschutzeinrichtung spätestens ausgelöst bzw. gezündet werden soll.

In weiterhin vorteilhafter Ausgestaltung der Erfindung bleibt die gemessene Bewegungsgröße und/oder der zeitliche Mittelwert der gemessenen Bewegungsgröße in dem Trainingsunterdrückungs-Zeitintervall vor dem Soll-Auslösezeitpunkt der Insassenschutzeinrichtung bei der Erzeugung des Auslösezusammenhanges unberücksichtigt.

In weiterhin vorteilhafter Ausgestaltung der Erfindung ist das Trainingsunterdrückungs-Zeitintervall zwischen 1 ms und 40 ms, insbesondere zwischen 2 ms und 10 ms, vorteilhafterweise in etwa 5 ms, lang.

Vorgenannte Aufgabe wird zudem durch ein Verfahren zur Erzeugung eines Auslösezusammenhanges zur Ausgabe eines Zündsignals zum Auslösen einer Insassenschutzeinrichtung eines Kraftfahrzeuges in Abhängigkeit einer gemessenen Bewegungsgröße des Kraftfahrzeuges oder eines zeitlichen Mittelwertes der gemessenen Bewegungsgröße gelöst, wobei der Auslösezusammenhang

- in Abhängigkeit der gemessenen Bewegungsgröße oder des zeitlichen Mittelwertes der gemessenen Bewegungsgröße einer Situation, für die ein Soll-Auslösezeitpunkt der Insassenschutzeinrichtung bekannt ist, und

- in Abhängigkeit eines Soll-Zündsignals zur Angabe des Soll-Auslösezeitpunktes

erzeugt wird, und wobei das Soll-Zündsignal bei der Erzeugung des Auslösezusammenhanges in einem Sondertrainings-Zeitintervall vor dem Soll-Auslösezeitpunkt der Insassenschutzeinrichtung, um den Soll-Auslösezeitpunkt der Insassenschutzeinrichtung herum oder nach dem Soll-Auslösezeitpunkt der Insassenschutzeinrichtung durch einen Sondertrainings-Wert ersetzt wird.

In vorteilhafter Ausgestaltung der Erfindung wird das Soll-Zündsignal bei der Erzeugung des Auslösezusammenhanges in dem Sondertrainings-Zeitintervall vor dem Soll-Auslösezeitpunkt der Insassenschutzeinrichtung durch den Sondertrainings-Wert ersetzt.

In weiterhin vorteilhafter Ausgestaltung der Erfindung liegt der Sondertrainings-Wert zwischen einem Wert des Soll-Zündsignals vor dem Soll-Auslösezeitpunkt und einem Wert des Soll-Zündsignals nach dem Soll-Auslösezeitpunkt.

In weiterhin vorteilhafter Ausgestaltung der Erfindung ist der Sondertrainings-Wert zeitvariant.

In weiterhin vorteilhafter Ausgestaltung der Erfindung ist das Sondertrainings-Zeitintervall zwischen 1 ms und 40 ms, insbesondere zwischen 2 ms und 10 ms, vorteilhafterweise in etwa 5 ms, lang.

Vorgenannte Aufgabe wird zudem durch ein Verfahren zum Herstellen eines Kraftfahrzeuges gelöst, wobei zumindest ein Crashsensor zum Messen der vorgenannten Bewegungsgröße und eine Insassenschutzeinrichtung in dem Kraftfahrzeug angeordnet werden, und wobei ein gemäß einem Verfahren mit einem oder mehreren der vorhergehenden Merkmale erzeugter Auslösezusammenhang zum Auslösen der Insassenschutzeinrichtung in dem Kraftfahrzeug implementiert wird.

Vorgenannte Aufgabe wird durch ein - insbesondere eines oder mehrere der vorhergehenden Merkmale umfassendes - Verfahren zum Herstellen eines Kraftfahrzeuges gelöst, wobei zumindest ein Crashsensor zum Messen der Bewegungsgröße und eine Insassenschutzeinrichtung in dem Kraftfahrzeug angeordnet werden, wobei ein Auslösezusammenhang zum Auslösen der Insassenschutzeinrichtung in Abhängigkeit der gemessenen Bewegungsgröße und/oder des zeitlichen Mittelwertes der gemessenen Bewegungsgröße einer Situation erzeugt wird, für die ein Soll-Auslösezeitpunkt der Insassenschutzeinrichtung bekannt ist, wobei jedoch die gemessene Bewegungsgröße und/oder der zeitliche Mittelwert der gemessenen Bewegungsgröße in einem Trainingsunterdrückungs-Zeitintervall vor dem Soll-Auslösezeitpunkt der Insassenschutzeinrichtung, um den Soll-Auslösezeitpunkt der Insassenschutzeinrichtung herum oder nach dem Soll-Auslösezeitpunkt der Insassenschutzeinrichtung bei der Erzeugung des Auslösezusammenhanges unberücksichtigt bleibt, und wobei der erzeugte Auslösezusammenhang zum Auslösen der Insassenschutzeinrichtung in dem Kraftfahrzeug implementiert wird.

In einer vorteilhaften Ausgestaltung vorgenannter Verfahren wird der Auslösezusammenhang zum Auslösen der Insassenschutzeinrichtung in Abhängigkeit eines zeitlichen Mittelwertes der gemessenen Bewegungsgröße über zumindest ein erstes Zeitintervall in Bezug auf die Situation erzeugt, für die der Soll-Auslösezeitpunkt der Insassenschutzeinrichtung bekannt ist, wobei der zeitliche Mittelwert der gemessenen Bewegungsgröße über das zumindest erste Zeitintervall jedoch in dem Trainingsunterdrückungs-Zeitintervall um den Soll-Auslösezeitpunkt der Insassenschutzeinrichtung herum, nach dem Soll-Auslösezeitpunkt der Insassenschutzeinrichtung oder vorteilhafterweise vor dem Soll-Auslösezeitpunkt der Insassenschutzeinrichtung bei der Erzeugung des Auslösezusammenhanges unberücksichtigt bleibt. In dazu vorteilhafter Ausgestaltung wird der Auslösezusammenhang zum Auslösen der Insassenschutzeinrichtung in Abhängigkeit eines zeitlichen Mittelwertes der gemessenen Bewegungsgröße über zumindest ein zweites, von dem ersten Zeitintervall verschiedenes, Zeitintervall in Bezug auf die Situation erzeugt, für die der Soll-Auslösezeitpunkt der Insassenschutzeinrichtung bekannt ist, wobei jedoch der zeitliche Mittelwert der gemessenen Bewegungsgröße über das zumindest zweite Zeitintervall in dem Trainingsunterdrückungs-Zeitintervall um den Soll-Auslösezeitpunkt der Insassenschutzeinrichtung herum, nach dem Soll-Auslösezeitpunkt der Insassenschutzeinrichtung oder vorteilhafterweise vor dem Soll-Auslösezeitpunkt der Insassenschutzeinrichtung bei der Erzeugung des Auslösezusammenhanges unberücksichtigt bleibt.

Ein zeitlicher Mittelwert im Sinne der Erfindung kann ein arithmetischer Mittelwert oder ein gewichteter Mittelwert sein. Bei einem derartigen gewichteten Mittelwert können z.B. jüngere Werte der Bewegungsgröße in dem betreffenden Zeitintervall stärker gewichtet werden als ältere Werte der Bewegungsgröße in dem betreffenden Zeitintervall. Ein Mittelwert im Sinne der Erfindung kann auch ein einem Mittelwert proportionaler Wert sein. In vorteilhafter Ausgestaltung der Erfindung ist der Mittelwert ein dem arithmetischen Mittelwert proportionaler Wert. Dabei ist der Mittelwert vorteilhafterweise ein dem Integral der Bewegungsgröße in dem betreffenden Zeitintervall bzw. der Summe von Abtastwerten der Bewegungsgröße in dem betreffenden Zeitintervall proportionaler Wert.

Ein zweites, von einem ersten Zeitintervall verschiedenes, Zeitintervall im Sinne der Erfindung kann sich von dem ersten Zeitintervall in seiner Länge und/oder seiner Lage unterscheiden.

In weiterhin vorteilhafter Ausgestaltung der Erfindung ist das erste Zeitintervall und/oder das zweite Zeitintervall zwischen 1 ms und 200 ms, insbesondere zwischen 4 ms und 32 ms, vorteilhafterweise zwischen 8 ms und 24 ms, lang.

In weiterhin vorteilhafter Ausgestaltung der Erfindung sind das erste Zeitintervall und/oder das zweite Zeitintervall zwischen 1 ms und 50 ms, vorteilhafterweise 2 ms und 16 ms, voneinander versetzt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen, wobei gleiche Bezugszeichen gleiche oder gleichartige Gegenstände bezeichnen. Dabei zeigen:

Fig. 1     eine Draufsicht auf ein Kraftfahrzeug,
Fig. 2     ein Ausführungsbeispiel für ein Insassenschutzsystem,
Fig. 3     ein Ausführungsbeispiel eines Steuerungsmoduls,
Fig. 4     ein Ausführungsbeispiel eines Auslösemoduls,
Fig. 5     ein Ausführungsbeispiel eines Ausgangssignals eines Crashsensors,
Fig. 6     das Integral des Ausgangssignals gemäß Fig. 5 in einem Zeitintervall,
Fig. 7     ein Ausführungsbeispiel eines neuronalen Netzes,
Fig. 8     ein Ausführungsbeispiel eines Entscheidungsbaumes,
Fig. 9     ein Ausführungsbeispiel eines Verfahrens zum Herstellen eines Kraftfahrzeuges,
Fig. 10    das Integral gemäß Fig. 6 mit einem Trainingsunterdrückungs-Zeitintervall,
Fig. 11    einen Ausschnitt des Integrals gemäß Fig. 10,
Fig. 12    ein Soll-Zündsignal mit einem Trainingsunterdrückungs-Zeitintervall,
Fig. 13    einen Ausschnitt des Integrals gemäß Fig. 6,
Fig. 14    ein weiteres Soll-Zündsignal mit einem Trainingsunterdrückungs-Zeitintervall,
Fig. 15    ein Soll-Zündsignal,
Fig. 16    ein Soll-Zündsignal mit einem Sondertrainings-Zeitintervall,
Fig. 17    ein weiteres Soll-Zündsignal mit einem Sondertrainings-Zeitintervall,
Fig. 18    ein weiteres Soll-Zündsignal mit einem Sondertrainings-Zeitintervall,
Fig. 19    ein weiteres Ausführungsbeispiel eines Auslösemoduls,
Fig. 20    ein weiteres Ausführungsbeispiel eines Auslösemoduls und
Fig. 21    ein weiteres Ausführungsbeispiel eines Auslösemoduls.

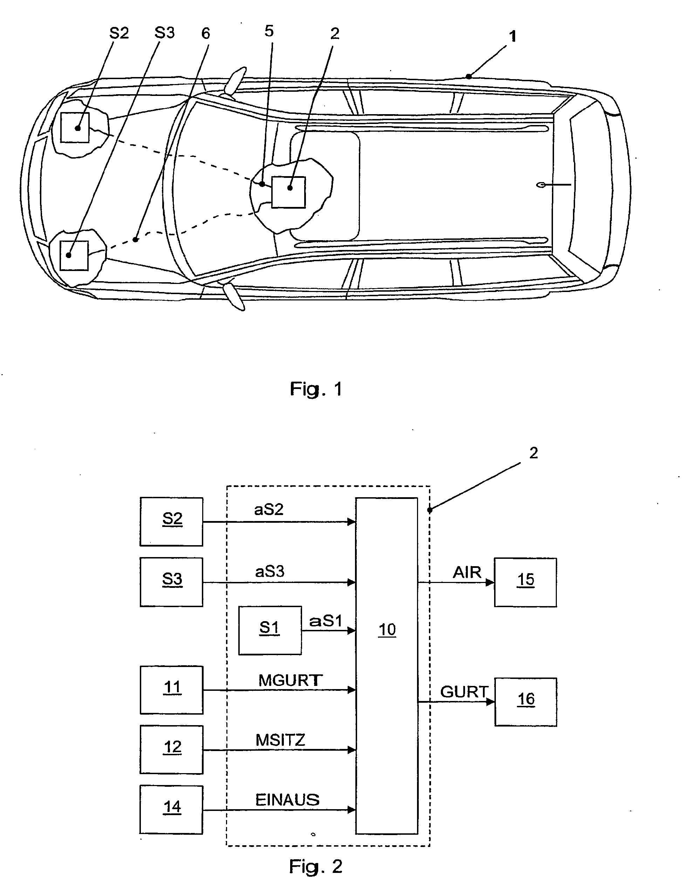

Fig. 1 zeigt eine Draufsicht auf ein Kraftfahrzeug 1 mit einem - in Fig. 2 in Form eines Blockschaltbildes dargestellten-Insassenschutzsystem. Das Insassenschutzsystem umfasst zumindest einen - nicht in Fig. 1 jedoch in Fig. 2 dargestellten-Airbag 15 und/oder einen - nicht in Fig. 1 jedoch in Fig. 2 dargestellten - Gurtstraffer 16. Das Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Crashsensor S2 und einen in die linke vordere Seite des Kraftfahrzeuges 1 integrierten Crashsensor S3. Die Crashsensoren S2 und S3 sind mit dem Steuergerät 2 durch Zuleitungen 5 und 6 verbunden.

Die Crashsensoren S2 und S3 sowie ein weiterer - wie in Fig. 2 dargestellt in das Steuergerät 2 integrierter - Crashsensor S1 sind gemäß dem vorliegenden Ausführungsbeispiel als Beschleunigungssensoren ausgebildet. Geeignete Beschleunigungssensoren sind z.B. in dem unter der Internetseite www.informatik.uni-dortmund.de/airbag/seminarphase/hardware_vortrag.pdf

veröffentlichten Artikel "Hardware und Mechanik realer Airbagsteuerungen", Kapitel 3.2 'Beschleunigungssensor' offenbart. Geeignete Beschleunigungssensoren sind z.B. Bosch SMB060, Bosch PAS3 oder Bosch UPF1. Ein geeigneter Beschleunigungssensor kann z.B. einen Bessel-Tiefpassfilter mit einer Grenzfrequenz von z.B. 400 Hz umfassen. Die Crashsensoren S1, S2 und S3 liefern als Ausgangssignale Beschleunigungswerte aS1, aS2 bzw. aS3.

Das Insassenschutzsystem umfasst zudem einen Gurtsensor 11 zum Erkennen, ob ein Sicherheitsgut angelegt ist, und zur Ausgabe einer entsprechenden Gurtinformation MGURT. Das Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Ein geeigneter Sitzbelegungssensor ist z.B. ein in den Sitz integrierter Drucksensor. Geeignet ist auch eine in dem unter der Internetseite

www.informatik.uni-dortmund.de/airbag/seminarphase/hardware_vortrag.pdf

veröffentlichten Artikel "Hardware und Mechanik realer Airbagsteuerungen", Kapitel 3.3 'Innenraum Sensierung' offenbarte Infrarotabtastung. Mittels Infrarotabtastung und Fuzzy Logic lässt sich dabei nicht nur erkennen, ob ein Sitz belegt ist, sondern auch, ob es sich dabei um einen Gegenstand wie eine Tasche handelt oder um einen Menschen. Dazu sendet eine Zeile von z.B. acht oder mehr Leuchtdioden oberhalb des Sitzes Infrarotlicht aus und eine CCD-Matrix aus 64 Bildpunkten nimmt die so beleuchtete Szene auf. Diese charged coupled devices, kurz CCD, bestehen aus Photodioden und Verstärkerelementen in Matrixanordnungen. Einfallendes Licht setzt dabei jeweils Ladungsträger frei. Ein so erzeugtes Signal wird verstärkt und verarbeitet beziehungsweise gespeichert. Dieser Vorgang wird unter verschiedenen Winkeln wiederholt und so der Sitz abgetastet. Algorithmen der Bildverarbeitung und der Fuzzy Logic erkennen aus diesen Signalen Konturen von Objekten und Menschen.

Es kann weiterhin vorgesehen sein, dass das Insassenschutzsystem ein Bedienelement 14 zur Aktivierung bzw. Deaktivierung des Airbags 15 umfasst. Ein entsprechendes Schaltsignal ist mit Bezugszeichen EINAUS bezeichnet.

Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und/oder des Schaltsignals EINAUS.

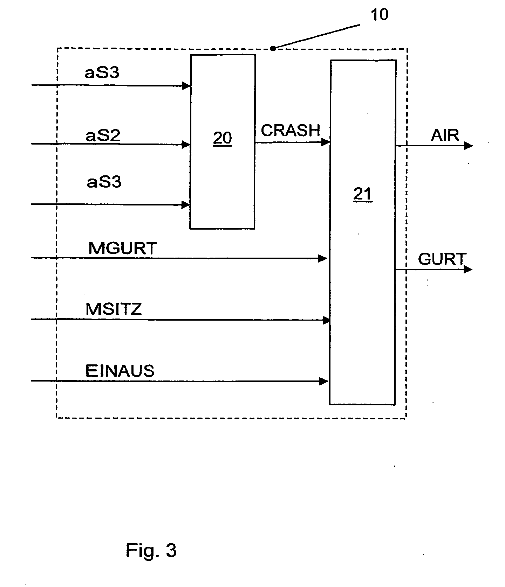

Fig. 3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und/oder des Schaltsignals EINAUS. So kann z.B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT bzw. Zündsignale im Sinne der Erfindung können ein - z.B. dem in der DE 100 35 505 A1 beschriebenen "FIRElNO-FIRE"-Signal entsprechendes - binäres Signal sein, das angibt, ob eine Insassenschutzeinrichtung, wie ein Airbag und/oder ein Gurtstraffer, ausgelöst werden soll. Sowohl der Zündvorschlag CRASH als auch die Zündsignale AIR und GURT bzw. Zündsignale im Sinne der Erfindung können auch ein komplexes Signal sein. Sowohl der Zündvorschlag CRASH als auch das Zündsignal AIR bzw. Zündsignale im Sinne der Erfindung können z.B. ein komplexes Signal sein, das angibt, in welchem Ausmaß (z.B. Stufe 1 oder Stufe 2) der Airbag 15 gezündet werden soll. Sowohl der Zündvorschlag CRASH als auch das Zündsignal AIR bzw. Zündsignale im Sinne der Erfindung können z.B. zudem einen in der DE 100 35 505 A1 beschriebenen Crashschwereparameter bzw. eine Insassenbeschleunigung bzw. -belastung umfassen. Es kann vorgesehen sein, dass sowohl der Zündvorschlag CRASH als auch die Zündsignale AIR und GURT bzw. Zündsignale im Sinne der Erfindung den Ort und/oder die Richtung eines Zusammenstoßes angeben können.

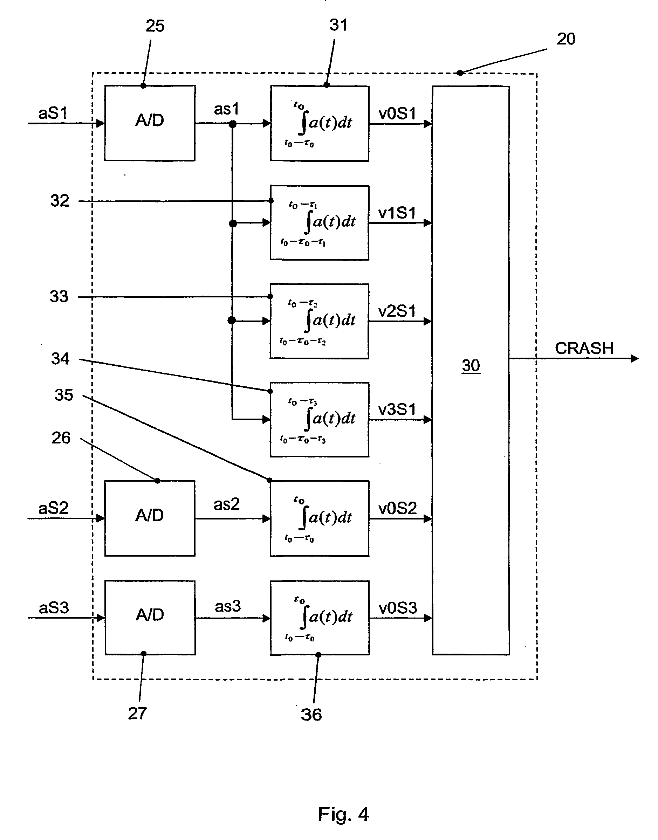

Fig. 4 zeigt das Auslösemodul 20 in einer beispielhaften Ausgestaltung. Das Auslösemodul 20 umfasst einen A/D-Wandler 25 (analog/digtal-Wandler) zum Abtasten des Beschleunigungswertes aS1 und zur Ausgabe eines abgetasteten Beschleunigungswertes as1, einen A/D-Wandler 26 zum Abtasten des Beschleunigungswertes aS2 und zur Ausgabe eines abgetasteten Beschleunigungswertes as2 und einen A/D-Wandler 27 zum Abtasten des Beschleunigungswertes aS3 und zur Ausgabe eines abgetasteten Beschleunigungswertes as3. Die Abtastfrequenz der $\Delta t$ der A/D-Wandler 25, 26 und 27 kann z. B. 4 kHz betragen. Das Auslösemodul 20 umfasst zudem (digitale) Integratoren 31, 32, 33, 34, 35 und 36.

Mittels des Integrators 31 wird ein Pseudogeschwindigkeitswert v0S1 zu einem Zeitpunkt $t_0$ gemäß

$$v0S1 = \int_{t_0-\tau_0}^{t_0} as1 \cdot dt$$

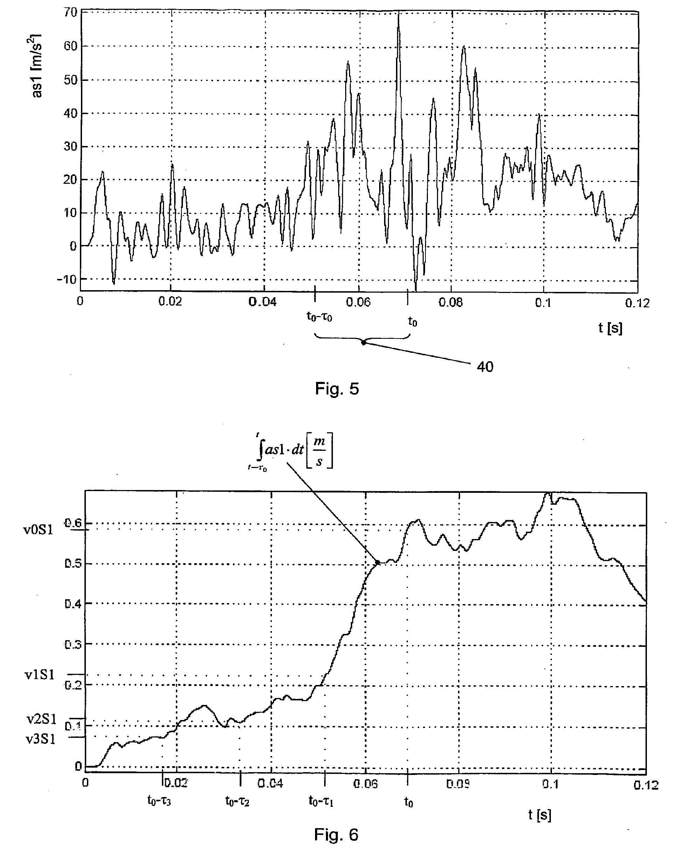

ermittelt, wobei $\tau_0$ die Länge eines Zeitintervalls $[t_0-\tau_0, t_0]$ bzw. 40 (vgl. Fig. 5) ist. Der Zeitpunkt $t_0$ bezeichnet den aktuellen Zeitpunkt, also den aktuellen Wert der Zeit t.

Mittels des Integrators 32 wird ein Pseudogeschwindigkeitswert v1S1 zu einem Zeitpunkt $t_0-\tau_1$ gemäß

$$v1S1 = \int_{t_0-\tau_0-\tau_1}^{t_0-\tau_1} as1 \cdot dt$$

ermittelt.

Mittels des Integrators 33 wird ein Pseudogeschwindigkeitswert v2S1 zu einem Zeitpunkt $t_0-\tau_2$ gemäß

$$v2S1 = \int_{t_0-\tau_0-\tau_2}^{t_0-\tau_2} as1 \cdot dt$$

ermittelt.

Mittels des Integrators 34 wird ein Pseudogeschwindigkeitswert v3S1 zu einem Zeitpunkt $t_0-\tau_3$ gemäß

$$v3S1 = \int_{t_0-\tau_0-\tau_3}^{t_0-\tau_3} as1 \cdot dt$$

ermittelt.

Mittels des Integrators 35 wird ein Pseudogeschwindigkeitswert v0S2 zum Zeitpunkt $t_0$ gemäß

$$v0S2 = \int_{t_0-\tau_0}^{t_0} as2 \cdot dt$$

ermittelt.

Mittels des Integrators 36 wird ein Pseudogeschwindigkeitswert v0S3 zum Zeitpunkt $t_0$ gemäß

$$v0S3 = \int_{t_0-\tau_0}^{t_0} as3 \cdot dt$$

ermittelt.

Die Wirkung der Integratoren 31, 32, 33, 34, 35 und 36 verdeutlichen Fig. 5 und Fig. 6. Dabei zeigt Fig. 5 einen beispielhaften Verlauf des (abgetasteten) Beschleunigungswertes as1 über die Zeit t bei einem Frontalzusammenstoß des Kraftfahrzeuges 1 mit einem Hindernis. Fig. 6 zeigt einen beispielhaften Verlauf des Pseudogeschwindigkeitswertes v0S1 für $\tau_0$ = 24ms.

In der in Fig. 6 dargestellten beispielhaften Ausgestaltung beträgt $\tau_1$ 17 ms, $\tau_2$ 34 ms und $\tau_3$ 51 ms. In einer vorteilhaften Ausgestaltung kann $\tau_1$ 8 ms, $\tau_2$ 16 ms und $\tau_3$ 24 ms betragen.

Die Pseudogeschwindigkeitswerte v0S1, v1S1, v2S1, v3S1, v0S2 und v0S3 sind Beispiele für zeitliche Mittelwerte im Sinne der Erfindung.

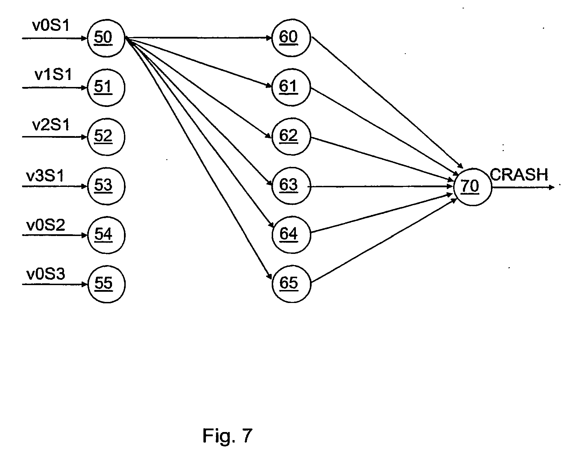

Das Auslösemodul 20 umfasst weiterhin einen Auslösezusammenhang 30 zur Erzeugung des Zündvorschlags CRASH. Der Auslösezusammenhang 30 kann z.B. als neuronales Netz ausgebildet sein, wie es in Fig. 7 in beispielhafter Ausgestaltung dargestellt ist. Das in Fig. 7 dargestellte neuronale Netz umfasst sechs Eingangsknoten 50, 51, 52, 53, 54, 55, sechs verdeckte Knoten 60, 61, 62, 63, 64, 65 und einen Ausgangsknoten 70, wobei jeder Eingangsknoten 50, 51, 52, 53, 54, 55 mit jedem verdeckten Knoten 60, 61, 62, 63, 64, 65 und jeder verdeckte Knoten 60, 61, 62, 63, 64, 65 mit dem Ausgangsknoten 70 verbunden ist. In Fig. 7 sind jedoch aus Gründen der Übersichtlichkeit nicht alle Verbindungen zwischen den Eingangsknoten 50, 51, 52, 53, 54, 55 und den verdeckten Knoten 60, 61, 62, 63, 64, 65 dargestellt.

Eingangsgröße in den Eingangsknoten 50 ist der Pseudogeschwindigkeitswert v0S1, Eingangsgröße in den Eingangsknoten 51 ist der Pseudogeschwindigkeitswert v1S1, Eingangsgröße in den Eingangsknoten 52 ist der Pseudogeschwindigkeitswert v2S1, Eingangsgröße in den Eingangsknoten 53 ist der Pseudogeschwindigkeitswert v3S1, Eingangsgröße in den Eingangsknoten 54 ist der Pseudogeschwindigkeitswert v0S2, und Eingangsgröße in den Eingangsknoten 55 ist der Pseudogeschwindigkeitswert v0S3. Ausgangsgröße aus dem Ausgangskoten 70 ist der Zündvorschlag CRASH.

Einzelheiten zu neuronalen Netzen können der US 5 583 771, der US 5 684 701 sowie den in der US 5 684 701 zitierten Dokumenten "Techniques And Application Of Neural Networks", Taylor, M. und Lisboa, Ellis Horwood, West Sussex, England, 1993, "Naturally Intelligent Systems", Caudill, M. und Butler, G., MIT Press, Cambridge, 1990 und "Digital Neural Networks", Kung, S. Y., PTR Prentice Hall, Eaglewood Cliffs, NJ., 1993 entnommen werden.

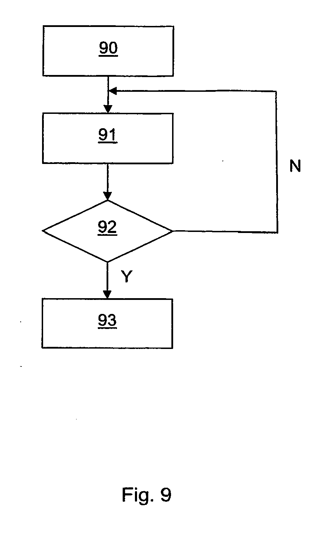

Der Auslösezusammenhang 30 kann alternativ z.B. auch als Abfolge von Vergleichen mit Grenzwerten ausgestaltet werden. Tabelle 1 zeigt eine solche Abfolge von Vergleichen mit Grenzwerten, wobei der in Tabelle 1 dargestellte Code durch ein unter Bezugnahme auf Fig. 9 erläutertes Verfahren automatisch erzeugt worden ist. Für den in Tabelle 1 dargestellte Code beträgt $\tau_1$ 4 ms, $\tau_2$ 8 ms und $\tau_0$ 24 ms.

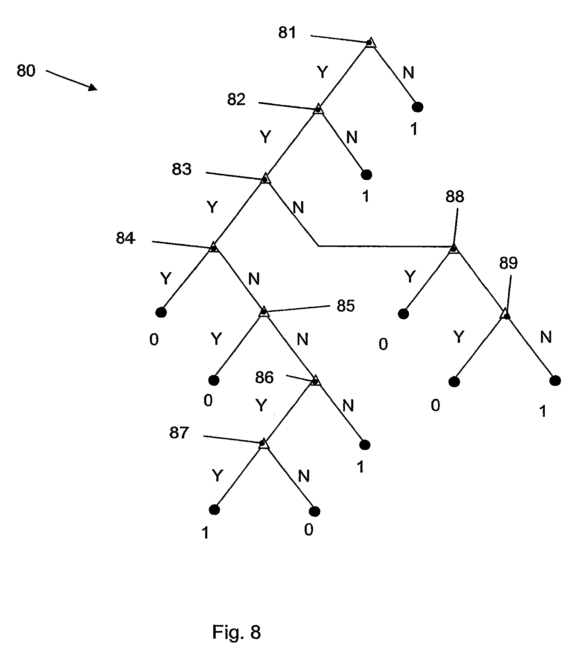

Fig. 8 zeigt den Code gemäß Tabelle 1 in einer Darstellung als Entscheidungsbaum 80. Dabei bezeichnet Bezugszeichen 81 die Abfrage, ob v0S3 kleiner ist als ein Grenzwert $\delta_{v0S3}$. Bezugszeichen 82 bezeichnet die Abfrage, ob v0S2 kleiner ist als ein Grenzwert $\delta_{v0S2}$. Bezugszeichen 83 bezeichnet die Abfrage, ob v2S1 kleiner ist als ein Grenzwert $\delta_{v2S1}$. Bezugszeichen 84 bezeichnet die Abfrage, ob v0S1 kleiner ist als ein Grenzwert $\delta_{v0S1}$. Bezugszeichen 85 bezeichnet die Abfrage, ob v0S3 kleiner ist als ein Grenzwert $\delta_{v0S3,2}$. Bezugszeichen 86 bezeichnet die Abfrage, ob v0S1 kleiner ist als ein Grenzwert $\delta_{v0S1,2}$. Bezugszeichen 87 bezeichnet die Abfrage, ob v1S1 kleiner ist als ein Grenzwert $\delta_{v1S1}$. Bezugszeichen 88 bezeichnet die Abfrage, ob v0S2 kleiner ist als ein Grenzwert $\delta_{v0S2,2}$. Bezugszeichen 89 bezeichnet die Abfrage, ob v0S3 kleiner ist als ein Grenzwert $\delta_{v0S3,3}$.

Fig. 9 zeigt ein Verfahren zum Herstellen des Kraftfahrzeuges 1. Dazu wird zunächst in einem Schritt 90 ein Test-Prototyp des Kraftfahrzeuges 1 erstellt, in den den Crashsensoren S1, S2, S3 entsprechende Crashsensoren zum Messen der Bewegungsgröße des Kraftfahrzeuges 1 eingebaut werden. Der Test-Prototyp des Kraftfahrzeuges 1 wird einem Crashtest unterzogen, wobei die Ausgangssignale der den Crashsensoren S1, S2, S3 entsprechenden Crashsensoren gemessen werden. Aus diesen Ausgangssignalen bzw. den Ausgangssignalen weiterer Crashtests wird eine Datenbasis aufgebaut. In dieser Datenbasis sind aus den vorgenannten Ausgangssignalen der den Crashsensoren S1, S2, S3 entsprechenden Crashsensoren gemäß einem in Fig. 4, Fig. 19, Fig. 20 bzw. Fig. 21 beschriebenen Verfahren erzeugte Pseudogeschwindigkeitswerte v0S1, v1S1, v2S1, v3S1, v0S2, v0S3 zusammen mit einem Soll-Zündsignal CRASHTRUE abgespeichert, das einen Soll-Zündzeitpunkt bzw. einen Soll-Auslösezeitpunkt angibt. Das Soll-Zündsignal CRASHTRUE kann z.B. einen Soll-Zündzeitpunkt des Airbags 15 angeben.

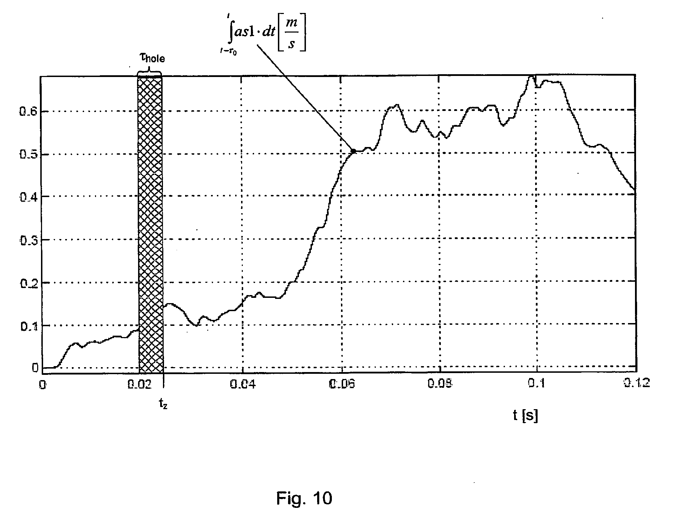

Dem Schritt 90 folgt ein Schritt 91, in dem der Auslösezusammenhang 30 auf der Grundlage der in der Datenbasis abgespeicherten Daten erzeugt wird. Dabei bleiben jedoch die Pseudogeschwindigkeitswerte v0S1, v1S1, v2S1, v3S1, v0S2, v0S3 in einem Trainingsunterdrückungs-Zeitintervall um den Soll-Auslösezeitpunkt des Airbags 15 bzw. des Gurtstraffers 16 herum, in einem Trainingsunterdrückungs-Zeitintervall nach dem Soll-Auslösezeitpunkt des Airbags 15 bzw. des Gurtstraffers 16 oder vorteilhafterweise - wie im folgenden unter Bezugnahme auf Fig. 10, Fig. 11, Fig. 12, Fig. 13 und Fig. 14 erläutert - in einem Trainingsunterdrückungs-Zeitintervall vor dem Soll-Auslösezeitpunkt des Airbags 15 bzw. des Gurtstraffers 16 bei der Erzeugung des Auslösezusammenhanges 30 unberücksichtigt.

## Tabelle 1

```
/* Evaluation function */
int evaluate_Action(double *x)
{
        int CRASH;

        if (vOS3 < δ_vOS3 ) {
              if (vOS2 < δ_vOS2 ) {
                    if (v2S1 < δ_v2S1 ) {
                          if (vOS1 < δ_vOS1 ) {
                                CRASH = 0;
                          } else {
                                if (vOS3 < δ_vOS3,2 ) {
                                      CRASH = 0;
                                } else {
                                      if (vOS1 < δ_vOS1,2 ) {
                                            if (v1S1 < δ_v1S1 ) {
                                                  CRAS H = 1;
                                            } else {
                                                  CRAS H = 0;
                                            }
                                      } else {
                                            CRASH = 1;
                                      }
                                }
                          }
                    } else {
                          if (vOS2 < δ_vOS2,2 ) {
                                CRASH = 0;
                          } else {
                                if (vOS3 < δ_vOS3,3 ) {
                                      CRASH = 0;
                                } else {
                                      CRASH = 1;
                                }
                          }
                    }
              } else {
                    CRASH = 1;
              }
        } else {
              CRASH = 1;
        }
        return (CRASH);
}
```

Fig. 10 zeigt den Pseudogeschwindigkeitswert gemäß Fig. 6 mit einem entsprechenden Trainingsunterdrük-kungs-Zeitintervall $\tau_{hole}$, das vor einem mit $t_z$ bezeichneten Soll-Auslösezeitpunkt des Airbags 15 bzw. des Gurtstraffers 16 liegt. Der Soll-Auslösezeitpunkt $t_z$ ist dabei vorteilhafterweise der Zeitpunkt, bis zu dem der Airbag 15 bzw. der Gurtstraffer 16 spätestens ausgelöst werden soll. Das Trainingsunterdrückungs-Zeitintervall $\tau_{hole}$ ist zwischen 1 ms und 40 ms, insbesondere zwischen 2 ms und 10 ms, vorteilhafterweise in etwa 5 ms, lang. In dem vorliegenden Ausführungsbeispiel beträgt das Trainingsunterdrückungs-Zeitintervall $\tau_{hole}$ 5 ms.

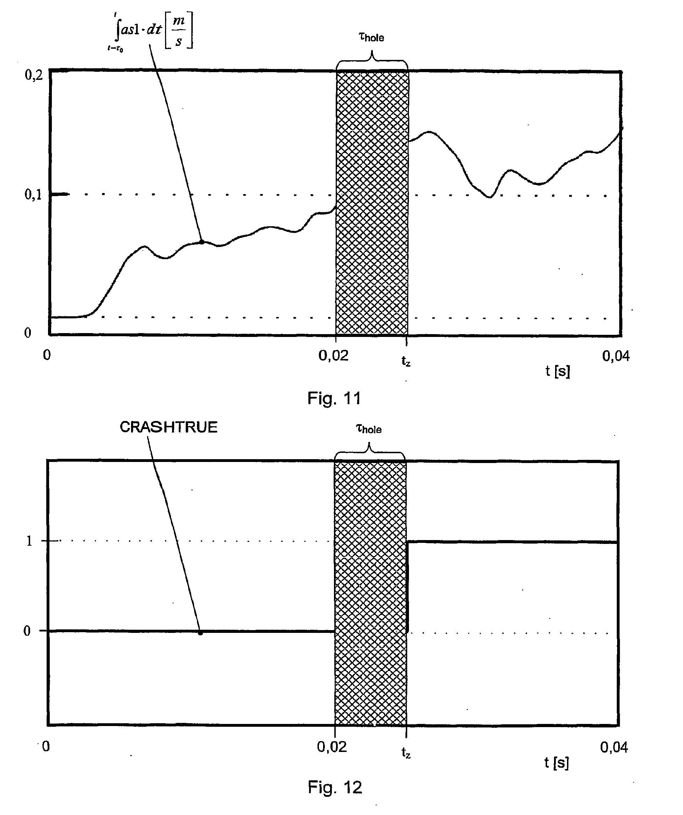

Fig. 11 zeigt einen Ausschnitt aus Fig. 10 für den Bereich zwischen 0 ms und 40 ms. Fig. 12 zeigt das zugeordnete Soll-Zündsignal CRASHTRUE. Das Soll-Zündsignal CRASHTRUE ist vor dem Soll-Auslösezeitpunkt $t_z$ gleich 0 und nach dem Soll-Auslösezeitpunkt $t_z$ gleich 1, bleibt jedoch ebenso wie der Pseudogeschwindigkeitswert gemäß Fig. 11 in dem Trainingsunterdrückungs-Zeitintervall $\tau_{hole}$ vor dem Soll-Auslösezeitpunkt $t_z$ für die Erzeugung des Auslösezusammenhanges 30 unberücksichtigt. Dies kann z.B. dadurch erfolgen, das die Pseudogeschwindigkeitswerte und das Soll-Zündsignal CRASHTRUE in dem Trainingsunterdrückungs-Zeitintervall $\tau_{hole}$ aus den Daten entfernt werden.

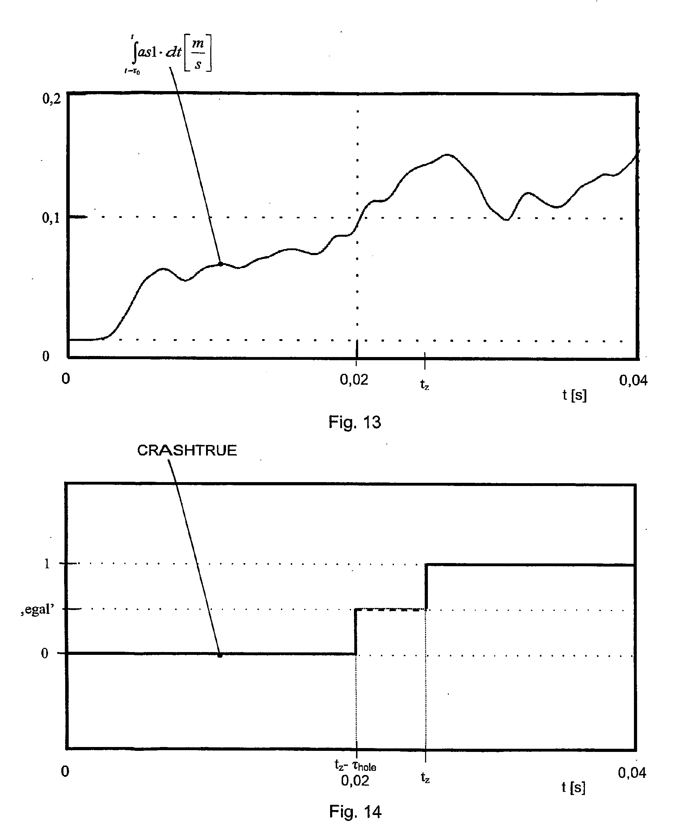

Fig. 13 und Fig. 14 zeigen ein dazu alternatives Vorgehen, das ebenfalls Pseudogeschwindigkeitswerte und das Soll-Zündsignal CRASHTRUE in dem Trainingsunterdrückungs-Zeitintervall $\tau_{hole}$ bei der Erzeugung des Auslösezusammenhanges 30 unberücksichtigt lässt. Dabei werden die Pseudogeschwindigkeitswerte zwar auch in dem Trainingsunterdrückungs-Zeitintervall $\tau_{hole}$ vor dem Soll-Auslösezeitpunkt $t_z$ für die Erzeugung des Auslösezusammenhanges 30 verwendet, das Soll-Zündsignal CRASHTRUE wird jedoch in dem Trainingsunterdrückungs-Zeitintervall $\tau_{hole}$ vor dem Soll-Auslösezeitpunkt $t_z$ um eine Variable 'egal' ergänzt, die angibt, dass sowohl eine während eines Trainings von dem Auslösezusammenhang 30 ausgegebene 0 als auch eine ausgegebene 1 für den Zündvorschlag CRASH richtig ist. Das heißt, egal ob der Auslösezusammenhang 30 während des Trainings bzw. Lernens innerhalb des Trainingsunterdrückungs-Zeitintervalls $\tau_{hole}$ als Zündvorschlag CRASH 0 oder 1 (oder irgendeinen anderen Wert) ausgibt, wird angenommen, dass die Lösung, also der Zündvorschlag CRASH, gleich dem Soll-Zündsignal CRASHTRUE ist.

Mittels der gemäß dem unter Bezugnahme auf Fig. 11, Fig. 12, Fig. 13 und Fig. 14 beschriebenen Vorgehen veränderten Daten der Datenbasis wird der Auslösezusammenhang 30 anschließend automatisch mit dem Ziel erzeugt, dass für die verwendeten Daten der Zündvorschlag CRASH gleich dem Soll-Zündsignal CRASHTRUE ist. Zur automatischen Erzeugung des Auslösezusammenhanges 30 in einer Ausgestaltung als in Fig. 7 dargestelltes neuronales Netzt können dafür herkömmliche Tools zur Erzeugung neuronaler Netze verwendet werden.

Zur automatischen Erzeugung des Auslösezusammenhanges 30 in einer Ausgestaltung als in Tabelle 1 dargestellte Abfolge von Vergleichen bzw. als in Fig. 8 dargestellten Entscheidungsbaum 80 kann z.B. die Routine "treefit" aus der "Statistics Toolbox" des Programms "MATLAB 7" von Mathworks verwendet werden. Dieses Programm kann unter der Internetadresse

www.mathworks.com/company/aboutus/contact_us/contact_sales.html

erworben werden. Einzelheiten zur Routine "treefit" sind unter der Internetadresse www.mathworks.com/access/helpdesk/help/toolbox/stats/treefit.html

offenbart.

Der Auslösezusammenhang 30 gemäß Fig. 8 bzw. Tabelle 1 lässt den Pseudogeschwindigkeitswert v3S1 unberücksichtigt. Dieser ist im Lernverfahren berücksichtigt, jedoch bei der Erzeugung des Codes gemäß Tabelle 1 verworfen worden.

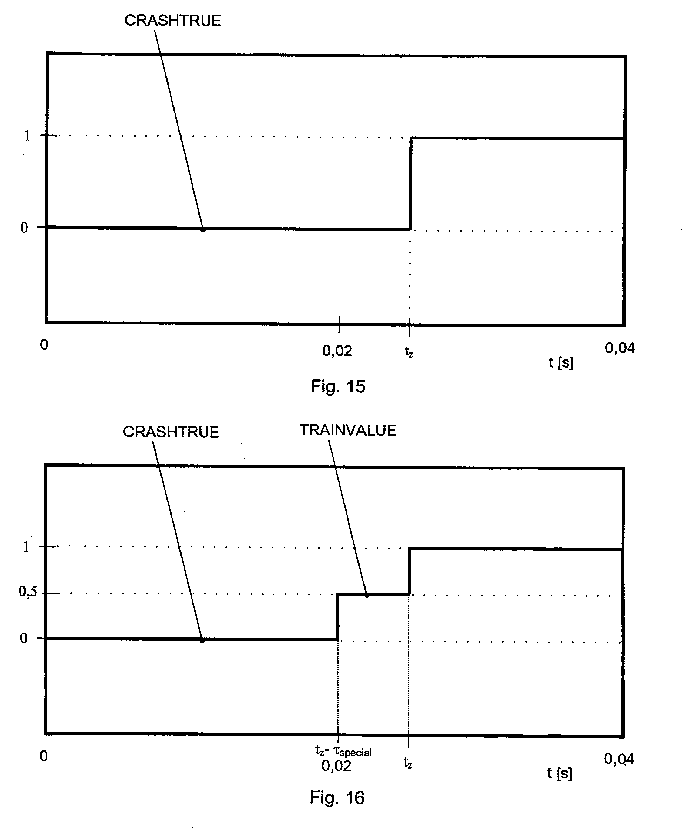

Alternativ zu dem unter Bezugnahme auf Fig. 10, Fig. 11, Fig. 12, Fig. 13 und Fig. 14 beschriebenen Vorgehen kann vorgesehen sein, dass das Soll-Zündsignal CRASHTRUE bei der Erzeugung des Auslösezusammenhanges 30 in einem Sondertrainings-Zeitintervall $\tau_{special}$ vor dem Soll-Auslösezeitpunkt $t_z$, um den Soll-Auslösezeitpunkt $t_z$ herum oder nach dem Soll-Auslösezeitpunkt $t_z$ durch einen Sondertrainings-Wert TRAINVALUE zu ersetzen. Ausführungsbeispiele für ein derartiges Vorgehen sind unter Bezugnahme auf Fig. 15, Fig. 16, Fig. 17 und Fig. 18 erläutert. Dabei zeigt Fig. 15 ein unverändertes Soll-Zündsignal und Fig. 16, Fig. 17 und Fig. 18 zeigen Soll-Zündsignale, bei denen der Wert 0 (vgl. Fig. 15) für die Erzeugung des Auslösezusammenhanges 30 in dem Sondertrainings-Zeitintervall $\tau_{special}$ vor dem Soll-Auslösezeitpunkt $t_z$ durch einen Sondertrainings-Wert TRAINVALUE ersetzt ist. In einer vorteilhaften Ausgestaltung ist das Sondertrainings-Zeitintervall zwischen 1 ms und 40 ms, insbesondere zwischen 2 ms und 10 ms, vorteilhafterweise in etwa 5 ms, lang.

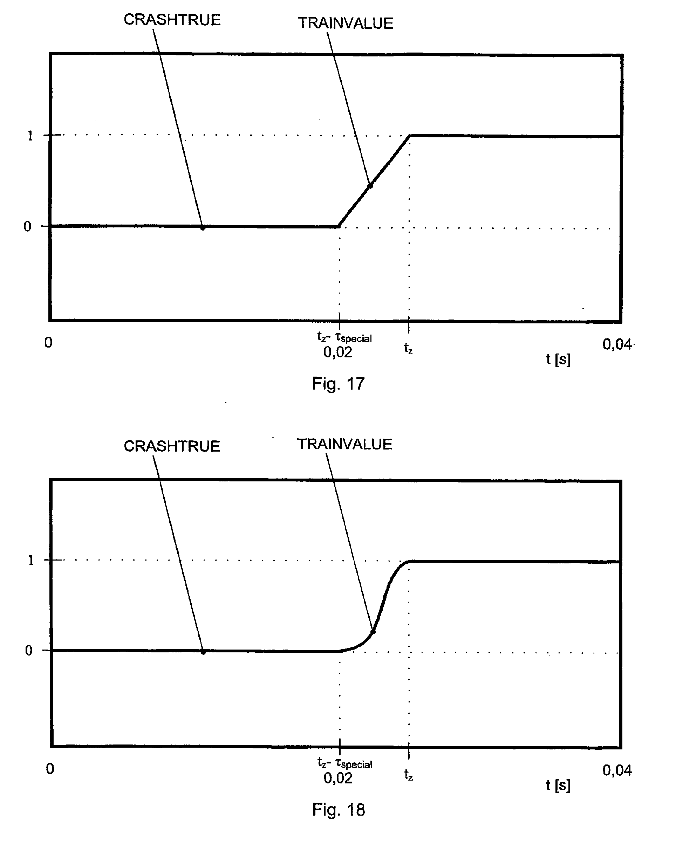

In dem Ausführungsbeispiel gemäß Fig. 16 beträgt der Sondertrainings-Wert TRAINVALUE in dem gesamten Sondertrainings-Zeitintervall $\tau_{special}$ 0,5. In vorteilhafter Ausgestaltung ist der Sondertrainings-Wert-wie in Fig. 17 und Fig. 18 dargestellt - zeitvariant. Dabei zeigt Fig. 17 eine vorteilhafte Ausgestaltung, bei der der Sondertrainings-Wert TRAINVALUE einen stetigen Übergang zwischen dem Wert (in diesem Falle 0) des Soll-Zündsignals CRASHTRUE vor dem Sondertrainings-Zeitintervall $\tau_{special}$ bzw. vor dem Soll-Auslösezeitpunkt $t_z$ und dem Wert (in diesem Falle 1) des Soll-Zündsignals CRASHTRUE vor dem Sondertrainings-Zeitintervall $\tau_{special}$ bzw. vor dem Soll-Auslösezeitpunkt $t_z$. Fig. 18 zeigt eine weitere vorteilhafte Ausgestaltung, bei der der Verlauf des Sondertrainings-Wertes TRAINVALUE derart gewählt ist, dass auch der Übergang der ersten zeitlichen Ableitung an den Grenzen des Sondertrainings-Zeitintervalls $\tau_{special}$ stetig ist.

Dem Schritt 91 folgt eine Abfrage 92, ob der so erzeugte Auslösezusammenhang 30 in Ordnung ist. Dazu wird der Auslösezusammenhang 30 mit den nicht im Schritt 91 verwendeten Einträgen der Datenbasis getestet. Ist der Auslösezusammenhang 30 in Ordnung, so folgt der Abfrage 92 ein Schritt 93. Andernfalls wird der Schritt 91 unter veränderten Bedingungen wiederholt.

In dem Schritt 93 wird der Auslösezusammenhang 30 in dem Steuergerät 2 implementiert. Das Steuergerät 2 wird anschließend zusammen mit den Crashsensoren S1, S2, S3 und entsprechenden Insassenschutzeinrichtungen, wie dem Airbag 15 bzw. dem Gurtstraffer 16, in dem Kraftfahrzeug 1 verbaut.

Obwohl in Verbindung mit einem binären Soll-Zündsignal CRASHTRUE und einem binären Zündvorschlag CRASH erläutert, ist die Erfindung in gleicher Weise auch für komplexe Soll-Zündsignale und Zündvorschläge anwendbar. Dies gilt sowohl für das unter Bezugnahme auf Fig. 11 und Fig. 12 beschriebene Vorgehen als auch für das unter Bezugnahme auf Fig. 13 und Fig. 14 beschriebene Vorgehen.

In dem vorgestellten bevorzugten Ausführungsbeispiel werden die Pseudogeschwindigkeitswerte v0S1, v1S1, v2S1, v3S1, v0S2, v0S3, also die zeitlichen Mittelwerte der (gemessenen) Beschleunigungswerte aS1, aS2, aS3, als Eingangs- und Trainingsgrößen des Auslösezusammenhanges 30 verwendet. Die (gemessenen) Beschleunigungswerte aS1, aS2, aS3 bzw. die abgetasteten Beschleunigungswerte as1, as2, as3 können in gleicher Weise wie die Pseudogeschwindigkeitswerte v0S1, v1S1, v2S1, v3S1, v0S2, v0S3 als unmittelbare und nicht nur mittelbare Eingangs- und Trainingsgrößen des Auslösezusammenhanges 30 verwendet werden. Dies gilt ebenfalls sowohl für das unter Bezugnahme auf Fig. 11 und Fig. 12 beschriebene Vorgehen als auch für das unter Bezugnahme auf Fig. 13 und Fig. 14 beschriebene Vorgehen. In entsprechender Abwandlung des unter Bezugnahme auf Fig. 11 und Fig. 12 beschriebenen Vorgehens werden dabei die (gemessenen) Beschleunigungswerte aS1, aS2, aS3 bzw. die abgetasteten Beschleunigungswerte as1, as2, as3 in dem Bereich des Trainingsunterdrückungs-Zeitintervalls $\tau_{hole}$ aus den Trainingsdaten des Auslösezusammenhanges 30 entfernt.

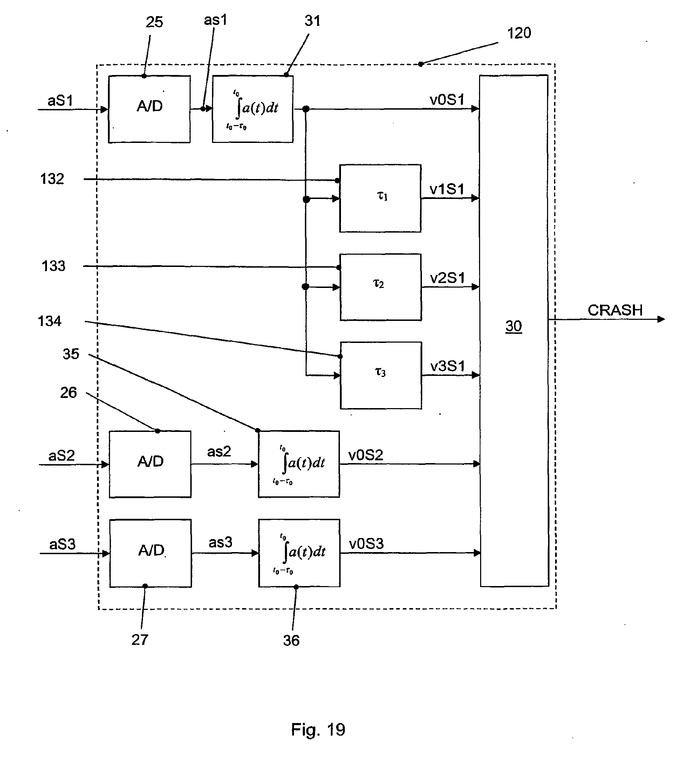

Fig. 19 zeigt ein zum Auslösemodul 20 alternatives Auslösemodul 120 in einer beispielhaften Ausgestaltung. Dabei sind die Integratoren 32, 33 und 34 durch Totzeitglieder 132, 133 und 134 ersetzt, die derart angeordnet sind, dass sich der Pseudogeschwindigkeitswert v1S1 als um die Zeit $\tau_1$ verzögerter Pseudogeschwindigkeitswert v0S1, der Pseudogeschwindigkeitswert v2S1 als um die Zeit $\tau_2$ verzögerter Pseudogeschwindigkeitswert v0S1 und der Pseudogeschwindigkeitswert v3S1 als um die Zeit $\tau_3$ verzögerter Pseudogeschwindigkeitswert v0S1 ergibt.

Eine mögliche (einfache) Implementierung des Integrators 31 (und entsprechend angepasst für die Integratoren 32, 33 und 34) ist z.B.

$$vS1(i) = c \cdot \Delta t \sum_{j=i-\frac{\tau_0}{\Delta t}}^{i} as1(j)$$

wobei i ein Laufindex zur Angabe des aktuellen Zeitpunktes $t_0$ und eine Konstante ist. Die Pseudogeschwindigkeitswerte v0S1, v1S1, v2S1 und v3S1 ergeben sich in diesem Fall z.B. gemäß folgender Zusammenhänge:

$$v0S1 = vS1(i)$$

$$v1S1 = vS1(i - \frac{\tau_1}{\Delta t})$$

$$v2S1 = vS1(i - \frac{\tau_2}{\Delta t})$$

und

$$v3S1 = vS1(i - \frac{\tau_3}{\Delta t})$$

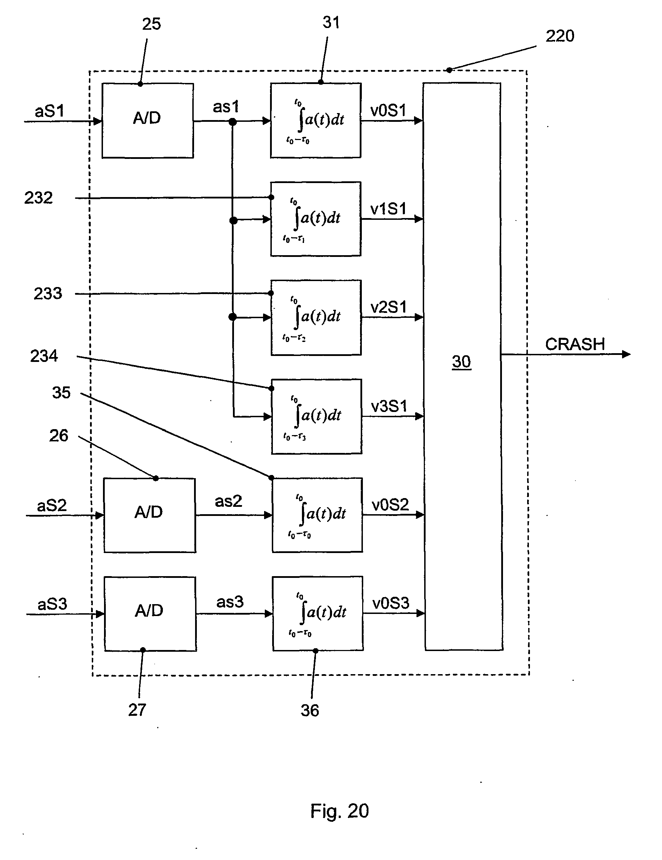

Fig. 20 zeigt ein zum Auslösemodul 20 alternatives Auslösemodul 220 in einer beispielhaften Ausgestaltung. Dabei sind die Integratoren 32, 33 und 34 durch Integratoren 232, 233 und 234 ersetzt. Dabei wird mittels des Integrators 232 der Pseudogeschwindigkeitswert v1S1gemäß

$$v1S1 = \int_{t_0 - \tau_1}^{t_0} as1 \cdot dt$$

**10**

ermittelt.

Mittels des Integrators 233 wird ein Pseudogeschwindigkeitswert v2S1 zu einem Zeitpunkt $t_0$ gemäß

$$v2S1 = \int_{t_0-\tau_2}^{t_0} as1 \cdot dt$$

ermittelt.

Mittels des Integrators 234 wird ein Pseudogeschwindigkeitsuvert v3S1 zu einem Zeitpunkt $t_0$ gemäß

$$v3S1 = \int_{t_0-\tau_3}^{t_0} as1 \cdot dt$$

ermittelt.

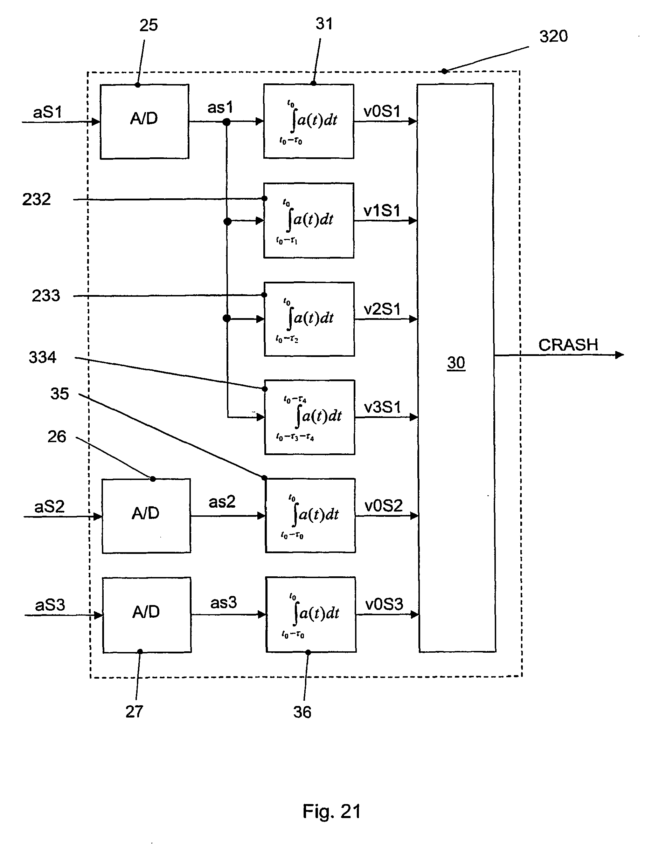

Bei dem Auslösemodul 20 gemäß Fig. 4 und dem Auslösemodul 120 gemäß Fig. 19 unterscheiden sich die Zeitintervalle in ihrer Position. Bei dem Auslösemodul 220 gemäß Fig. 20 unterscheiden sich die Zeitintervalle dagegen in ihrer Länge. Es kann auch vorgesehen werden, dass sich Zeitintervalle in ihrer Länge und in ihrer Position unterscheiden. Ein entsprechendes Ausführungsbeispiel zeigt Fig. 21. Fig. 21 zeigt ein zum Auslösemodul 220 alternatives Auslösemodul 320 in einer beispielhaften Ausgestaltung. Dabei ist der Integrator 234 durch einen Integrator 334 ersetzt, mittels dessen ein Pseudogeschwindigkeitswert v3S1 zu einem Zeitpunkt $t_0$-$\tau_4$ gemäß

$$v3S1 = \int_{t_0-\tau_3-\tau_4}^{t_0-\tau_4} as1 \cdot dt$$

ermittelt wird.

Die Erfindung führt zu einer besonders robusten Ansteuerung von Airbags und Gurtstraffern.

Obwohl in den Ausführungsbeispielen an Hand von Airbags und Gurtstraffern für einen Frontalzusammenstoß erläutert, soll die Erfindung selbstverständlich nicht auf diesen Fall beschränkt sein. Die Erfindung ist auch für Seitenairbags und andere Insassenschutzsysteme anwendbar. In einer Implementierung für Seitenairbags können die Crashsensoren S2 und S3 z.B. in der B-Säule angeordnet werden. Es kann vorgesehen werden, dass auch für Crashsensor S2 und/oder Crashsensor S3 zumindest ein Pseudogeschwindigkeitswert über zumindest einem weiteren Zeitintervall gebildet wird.

Das Steuergerät 2 kann auch ein verteiltes System sein. Ein Steuergerät im Sinne der Erfindung muss nicht in einem einzigen Gehäuse untergebracht sein. Ein Steuergerät im Sinne der Erfindung kann auch ein einzelner Chip oder eine Platine sein.

Soweit Entscheidungsbäume im Zusammenhang mit der Erzeugung des Zündvorschlags CRASH genannt bzw. erwähnt sind, können diese auch durch Regression Trees, Association Tables, Rule Sets, Supervector Mashines oder andere Mashine-Learning-Verfahren ersetzt werden.

Anstelle der Bewegungsgrößen bzw. deren Mittelwerte können auch Differenzen von Bewegungsgrößen, Mittelwerte dieser Differenzen und/oder Differenzen von Mittelwerten verwendet werden. So kann z.B. vor den Integratoren 31, 32, 33, 34, 35, 36, 232, 233, 234 bzw. 334 in Fig. 4, Fig. 19, Fig. 20 und/oder Fig. 21 eine Differenzbildung vorgesehen werden, so dass anstelle der abgetasteten Beschleunigungswerte as1, as2, as3 Differenzwerte $\Delta$as1, $\Delta$as2, $\Delta$as3 Eingangsgrößen der Integratoren 31, 32, 33, 34, 35, 36, 232, 233, 234 bzw. 334 sind, wobei $\Delta$as1 gleich der Differenz as1-as2, $\Delta$as2 gleich der Differenz as1-as3 und $\Delta$as3 gleich der Differenz as2-as3 ist. Es kann zudem vorgesehen sein, dass der Differenzwert $\Delta$as1 in gleicher Weise verarbeitet wird wie der abgetastete Beschleunigungswert as1 in Fig. 4, Fig. 19, Fig. 20 und/oder Fig. 21, dass der Differenzwert $\Delta$as2 in gleicher Weise verarbeitet wird wie der abgetastete Beschleunigungswert as1 in Fig. 4, Fig. 19, Fig. 20 und/oder Fig. 21 und/oder dass der Differenzwert $\Delta$as3 in gleicher Weise verarbeitet wird wie der abgetastete Beschleunigungswert as2 in Fig. 4, Fig. 19, Fig. 20 und/oder Fig. 21. In diesem Fall sind die Anzahl der Integratoren und die Anzahl der Eingangsgrößen des Auslösezusammenhanges 30 entsprechend anzupassen.

Differenzen können auch zeitliche Differenzen sein. So kann vorgesehen sein, anstelle der abgetasteten Beschleunigungswerte as1, as2, as3 Differenzwerte $\Delta as1$, $\Delta as2$, $\Delta as3$ als Eingangsgrößen der Integratoren 31, 32, 33, 34, 35, 36, 232, 233, 234 bzw. 334 zu verwenden, wobei $\Delta as1(t)$ gleich der Differenz as1(t)-as1(t-$\tau$), $\Delta as2$ gleich der Differenz as2(t)-as2(t-$\tau$) oder der Differenz as2(t)-as3(t-$\tau$) und $\Delta as3$ gleich der Differenz as3(t)-as3(t-$\tau$) oder der Differenz as3(t)-as2(t-$\tau$) ist.

Entsprechend vorgenannten Ausführungen in Bezug auf eine Differenzbildung können Bewegungsgrößen im Sinne der Erfindung auch Differenzen von Bewegungsgrößen sein, wenn sie als Eingangsgrößen verwendet werden.

Analog kann mit den Pseudogeschwindigkeitswerten v0S1, v1S1, v2S 1, v3S1, v0S2, v0S3 verfahren werden. Entsprechend können Mittelwerte von Bewegungsgrößen im Sinne der Erfindung auch Differenzen von Mittelwerten von Bewegungsgrößen bzw. Mittelwerte von Differenzen von Bewegungsgrößen sein, wenn sie als Eingangsgrößen verwendet werden.

**Bezugszeichenliste**

| | |
|---|---|
| 1 | Kraftfahrzeug |
| 2 | Steuergerät |
| 5, 6 | Zuleitungen |
| 10 | Steuerungsmodul |
| 11 | Gurtsensor |
| 12 | Sitzbelegungssensor |
| 14 | Bedienelement |
| 15 | Airbag |
| 16 | Gurtstraffer |
| 20, 120, 220, 320 | Auslösemodul |
| 21 | Feuertabelle |
| 25, 26, 27 | A/D-Wandler |
| 30 | Auslösezusammenhang |
| 31, 32, 33, 34, 35, 36, 232, 233, 234, 334 | Integrator |
| 40 | Zeitintervall |
| 50, 51, 52, 53, 54, 55 | Eingangsknoten |
| 60, 61, 62, 63, 64, 65 | verdeckter Knoten |
| 70 | Ausgangsknoten |
| 80 | Entscheidungsbaum |
| 81, 82, 83, 84, 85, 86, 87, 88, 89, 92 | Abfrage |
| 90, 91, 93 | Schritt |
| 132, 133, 134 | Totzeitglied |
| | |
| AIR, GURT | Zündsignal |
| aS1, aS2, aS3, as1, as2, as3 | Beschleunigungswert |
| CRASH | Zündvorschlag |
| CRASHTRUE | Soll-Zündsignal |
| EINAUS | Schaltsignal |
| MGURT | Gurtinformation |
| MSITZ | Sitzbelegungsinformation |
| S1, S2, S3 | Crashsensor |
| t | Zeit |
| $t_0$ | aktueller Zeitpunkt |
| $t_z$ | Soll-Auslösezeitpunkt |
| TRAINVALUE | Sondertrainings-Wert |
| v0S1, v1S1, v2S1, v3S1, v0S2, v0S3 | Pseudogeschwindigkeitswert |
| $\tau_0$ | Länge eines Zeitintervalls |
| $\tau_0$, $\tau_1$, $\tau_2$, $\tau_3$ | Länge eines Zeitintervalls oder Zeit(-verzögerung) |
| $\tau_{hole}$ | Trainingsunterdrückungs-Zeitintervall |
| $\tau_{special}$ | Sondertrainings-Zeitintervall |

**Patentansprüche**

1. Verfahren zur Erzeugung eines Auslösezusammenhanges (30) zum Auslösen einer Insassenschutzeinrichtung (15, 16) eines Kraftfahrzeuges (1) in Abhängigkeit einer gemessenen Bewegungsgröße (aS1, aS2, aS3) des Kraftfahrzeuges (1) oder eines zeitlichen Mittelwertes (v0S1, v1S1, v2S1, v3S1, v0S2, v0S3) der gemessenen Bewegungsgröße (aS1, aS2, aS3), **dadurch gekennzeichnet, dass** der Auslösezusammenhang (30) in Abhängigkeit der gemessenen Bewegungsgröße (aS1, aS2, aS3) oder des zeitlichen Mittelwertes (v0S1, v1S1, v2S1, v3S1, v0S2, v0S3) der gemessenen Bewegungsgröße (aS1, aS2, aS3) einer Situation erzeugt wird, für die ein Soll-Auslösezeitpunkt ($t_z$) der Insassenschutzeinrichtung (15, 16) bekannt ist, wobei die gemessene Bewegungsgröße (aS1, aS2, aS3) oder der zeitliche Mittelwert (v0S1, v1S1, v2S1, v3S1, v0S2, v0S3) der gemessenen Bewegungsgröße (aS1, aS2, aS3) jedoch in einem Trainingsunterdrückungs-Zeitintervall ($\tau_{hole}$) vor dem Soll-Auslösezeitpunkt ($t_z$) der Insassenschutzeinrichtung (15, 16), um den Soll-Auslösezeitpunkt ($t_z$) der Insassenschutzeinrichtung (15, 16) herum oder nach dem Soll-Auslösezeitpunkt ($t_z$) der Insassenschutzeinrichtung (15, 16) bei der Erzeugung des Auslösezusammenhanges (30) unberücksichtigt bleibt.

2. Verfahren nach Anspruch 1, **dadurch gekennzeichnet, dass** die gemessene Bewegungsgröße (aS1, aS2, aS3) oder der zeitliche Mittelwert (v0S1, v1S1, v2S1, v3S1, v0S2, v0S3) der gemessenen Bewegungsgröße (aS1, aS2, aS3) in einem Trainingsunterdrückungs-Zeitintervall ($\tau_{hole}$) vor dem Soll-Auslösezeitpunkt ($t_z$) der Insassenschutzeinrichtung (15, 16) bei der Erzeugung des Auslösezusammenhanges (30) unberücksichtigt bleibt.

3. Verfahren zur Erzeugung eines Auslösezusammenhanges (30) zur Ausgabe eines Zündsignals (CRASH, AIR, GURT) zum Auslösen einer Insassenschutzeinrichtung (15, 16) eines Kraftfahrzeuges (1) in Abhängigkeit einer gemessenen Bewegungsgröße (aS1, aS2, aS3) des Kraftfahrzeuges (1) oder eines zeitlichen Mittelwertes (v0S1, v1S1, v2S1, v3S1, v0S2, v0S3) der gemessenen Bewegungsgröße (aS1, aS2, aS3), **dadurch gekennzeichnet dass** der Auslösezusammenhang (30)

   - in Abhängigkeit der gemessenen Bewegungsgröße (aS1, aS2, aS3) oder des zeitlichen Mittelwertes (v0S1, v1S1, v2S1, v3S1, v0S2, v0S3) der gemessenen Bewegungsgröße (aS1, aS2, aS3) einer Situation, für die ein Soll-Auslösezeitpunkt ($t_z$) der Insassenschutzeinrichtung (15, 16) bekannt ist, und
   - in Abhängigkeit eines Soll- Zündsignals (CRASHTRUE) zur Angabe des Soll- Auslösezeitpunktes ($t_z$)

   erzeugt wird, und wobei das Soll-Zündsignal (CRASHTRUE) bei der Erzeugung des Auslösezusammenhanges (30) in einem Sondertrainings-Zeitintervall ($\tau_{special}$) vor dem Soll-Auslösezeitpunkt ($t_z$) der Insassenschutzeinrichtung (15, 16), um den Soll-Auslösezeitpunkt ($t_z$) der Insassenschutzeinrichtung (15, 16) herum oder nach dem Soll-Auslösezeitpunkt ($t_z$) der Insassenschutzeinrichtung (15, 16) durch einen Sondertrainings-Wert (TRAINVALUE) ersetzt wird.

4. Verfahren nach Anspruch 3, **dadurch gekennzeichnet, dass** das Soll-Zündsignal (CRASHTRUE) bei der Erzeugung des Auslösezusammenhanges (30) in dem Sondertrainings-Zeitintervall ($\tau_{special}$) vor dem Soll-Auslösezeitpunkt ($t_z$) der Insassenschutzeinrichtung (15, 16) durch den Sondertrainings-Wert (TRAINVALUE) ersetzt wird.

5. Verfahren nach Anspruch 3 oder 4, **dadurch gekennzeichnet, dass** der Sondertrainings-Wert (TRAINVALUE) zwischen einem Wert des Soll-Zündsignals (CRASHTRUE) vor dem Soll-Auslösezeitpunkt ($t_z$) und einem Wert des Soll-Zündsignals (CRASHTRUE) nach dem Soll-Auslösezeitpunkt ($t_z$) liegt.

6. Verfahren nach Anspruch 3, 4 oder 5, **dadurch gekennzeichnet, dass** der Sondertrainings-Wert (TRAINVALUE) zeitvariant ist.

7. Verfahren nach einem der vorhergehenden Ansprüche, **dadurch gekennzeichnet, dass** das Trainingsunterdrückungs-Zeitintervall ($\tau_{hole}$) oder das Sondertrainings-Zeitintervall ($\tau_{special}$) zwischen 1 ms und 40 ms lang ist.

8. Verfahren nach Anspruch 7, **dadurch gekennzeichnet, dass** das Trainingsunterdrückungs-Zeitintervall ($\tau_{hole}$) oder das Sondertrainings-Zeitintervall ($\tau_{special}$) zwischen 2 ms und 10 ms lang ist.

9. Verfahren nach Anspruch 8, **dadurch gekennzeichnet, dass** das Trainingsunterdrückungs-Zeitintervall ($\tau_{hole}$) oder das Sondertrainings-Zeitintervall ($\tau_{special}$) in etwa 5 ms lang ist.

10. Verfahren zum Herstellen eines Kraftfahrzeuges (1), **dadurch gekennzeichnet, dass** zumindest ein Crashsensor (S1, S2, S3) zum Messen der Bewegungsgröße (aS1, aS2, aS3) und eine Insassenschutzeinrichtung (15, 16) in dem Kraftfahrzeug (1) angeordnet werden, und dass ein gemäß einem Verfahren nach einem der vorhergehenden Ansprüche erzeugter Auslösezusammenhang (30) zum Auslösen der Insassenschutzeinrichtung (15, 16) in dem Kraftfahrzeug (1) implementiert wird.

**Claims**

1. Method for generating a triggering context (30) for triggering a vehicle occupant protection device (15, 16) of a motor vehicle (1) as a function of a measured movement variable (aS1, aS2, aS3) of the motor vehicle (1) or of a chronological mean value (v0S1, v1S1, v2S1, v3S1, v0S2, v0S3) of the measured movement variable (aS1, aS2, aS3), **characterized in that** the triggering context (30) is generated as a function of the measured movement variable (aS1, aS2, aS3) or of the chronological mean value (v0S1, v1S1, v2S1, v3S1, v0S2, v0S3) of the measured movement variable (aS1, aS2, aS3) of a situation for which a setpoint triggering time ($t_z$) of the vehicle occupant protection device (15, 16) is known, wherein the measured movement variable (aS1, aS2, aS3) or the chronological mean value (v0S1, v1S1, v2S1, v3S1, v0S2, v0S3) of the measured movement variable (aS1, aS2, aS3) is not taken into account in the generation of the triggering context (30) in a training suppression time interval ($\tau_{hole}$) before the setpoint triggering time ($t_z$) of the vehicle occupant protection device (15, 16), around the setpoint triggering time ($t_z$) of the vehicle occupant protection device (15, 16) or after the setpoint triggering time ($t_z$) of the vehicle occupant protection device (15, 16).

2. Method according to Claim 1, **characterized in that** the measured movement variable (aS1, aS2, aS3) or the chronological mean value (v0S1, v1S1, v2S1, v3S1, v0S2, v0S3) of the measured movement variable (aS1, aS2, aS3) is not taken into account in the generation of the triggering context (30) in a training suppression time interval ($\tau_{hole}$) before the setpoint triggering time ($t_z$) of the vehicle occupant protection device (15, 16).

3. Method for generating a triggering context (30) in order to output a firing signal (CRASH, AIR, BELT) for triggering a vehicle occupant protection device (15, 16) of a motor vehicle (1) as a function of a measured movement variable (aS1, aS2, aS3) of the motor vehicle (1) or of a chronological mean value (v0S1, v1S1, v2S1, v3S1, v0S2, v0S3) of the measured movement variable (aS1, aS2, aS3), **characterized in that** the triggering context (30) is generated

   - as a function of the measured movement variable (aS1, aS2, aS3) or of the chronological mean value (v0S1, v1S1, v2S1, v3S1, v0S2, v0S3) of the measured movement variable (aS1, aS2, aS3) of a situation for which a setpoint triggering time ($t_z$) of the vehicle occupant protection device (15, 16) is known,
   and
   - as a function of a setpoint firing signal (CRASHTRUE) for indicating the setpoint triggering time ($t_z$),

   and wherein the setpoint firing signal (CRASHTRUE) is replaced by a special training value (TRAINVALUE) during the generation of the triggering context. (30) in a special training time interval ($\tau_{special}$) before the setpoint triggering time ($t_z$) of the vehicle occupant protection device (15, 16), around the setpoint triggering time ($t_z$) of the vehicle occupant protection device (15, 16) or after the setpoint triggering time ($t_z$) of the vehicle occupant protection device (15, 16).

4. Method according to Claim 3, **characterized in that** the setpoint firing signal (CRASHTRUE) is replaced by the special training value (TRAINVALUE) during the generation of the triggering context (30) in the special training time interval ($\tau_{special}$) before the setpoint triggering time ($t_z$) of the vehicle occupant protection device (15, 16).

5. Method according to Claim 3 or 4, **characterized in that** the special training value (TRAINVALUE) lies between a value of the setpoint firing signal (CRASHTRUE) before the setpoint triggering time ($t_z$) and a value of the setpoint firing signal (CRASHTRUE) after the setpoint triggering time ($t_z$).

6. Method according to Claim 3, 4 or 5, **characterized in that** the special training value (TRAINVALUE) is a variable over time.

7. Method according to one of the preceding claims, **characterized in that** the training suppression time interval ($\tau_{hole}$) or the special training time interval ($\tau_{special}$) is between 1 ms and 40 ms long.

8. Method according to Claim 7, **characterized in that** the training suppression time interval ($\tau_{hole}$) or the special

training time interval ($\tau_{special}$) is between 2 ms and 10 ms long.

9. Method according to Claim 8, **characterized in that** the training suppression time interval ($\tau_{hole}$) or the special training time interval ($\tau_{special}$) is approximately 5 ms long.

10. Method for manufacturing a motor vehicle (1), **characterized in that** at least one crash sensor (S1, S2, S3) for measuring the movement variable (aS1, aS2, aS3) and a vehicle occupant protection device (15, 16) are arranged in the motor vehicle (1), and **in that** a triggering context (30) which is generated in accordance with a method according to one of the preceding claims is implemented in order to trigger the vehicle occupant protection device (15, 16) in the motor vehicle (1).

**Revendications**

1. Procédé pour produire un contexte de déclenchement (30) pour déclencher un dispositif de protection des passagers (15, 16) d'un véhicule automobile (1) en fonction d'une quantité de mouvement mesurée (aS1, aS2, aS3) du véhicule automobile (1) ou d'une valeur moyenne dans le temps (v0S1, v1S1, v2S1, v3S1, v0S2, v0S3) de la quantité de mouvement mesurée (aS1, aS2, aS3), le contexte de déclenchement (30) se produisant en fonction de la quantité de mouvement mesurée (aS1, aS2, aS3) ou de la valeur moyenne dans le temps (v0S1, v1S1, v2S1, v3S1, v0S2, v0S3) de la quantité de mouvement mesurée (aS1, aS2, aS3) d'une situation pour laquelle un moment de déclenchement de consigne ($t_z$) du dispositif de protection des passagers (15, 16) est connu, la quantité de mouvement mesurée (aS1, aS2, aS3) ou la valeur moyenne dans le temps (v0S1, v1S1, v2S1, v3S1, v0S2, v0S3) de la quantité de mouvement mesurée (aS1, aS2, aS3) n'étant cependant pas prise en compte dans un intervalle de temps de suspension d'entraînement ($\tau_{hole}$) avant le moment de déclenchement de consigne ($t_z$) du dispositif de protection des passagers (15, 16), environ au moment de déclenchement de consigne ($t_z$) du dispositif de protection des passagers (15, 16), ou après le moment de déclenchement de consigne ($t_z$) du dispositif de protection des passagers (15, 16), lors de la production du contexte de déclenchement.

2. Procédé selon la revendication 1, **caractérisé en ce que** la quantité de mouvement mesurée (aS1, aS2, aS3) ou la valeur moyenne dans le temps (v0S1, v1S1, v2S1, v3S1, v0S2, v0S3) de la quantité de mouvement mesurée (aS1, aS2, aS3) n'est pas prise en compte dans un intervalle de temps de suspension d'entraînement ($\tau_{hole}$) avant le moment de déclenchement de consigne ($t_z$) du dispositif de protection des passagers (15, 16) lors de la production du contexte de déclenchement (30).

3. Procédé pour la production d'un contexte de déclenchement (30) pour l'émission d'un signal d'activation (CRASH, AIR, GURT) pour déclencher un dispositif de protection des passagers (15, 16) d'un véhicule automobile (1) en fonction d'une quantité de mouvement mesurée (aS1, aS2, aS3) du véhicule automobile (1) ou d'une valeur moyenne dans le temps (v0S1, v1S1, v2S1, v3S1, v0S2, v0S3) de la quantité de mouvement mesurée (aS1, aS2, aS3), le contexte de déclenchement (30) étant produit

   - en fonction de la quantité de mouvement mesurée (aS1, aS2, aS3) ou de la valeur moyenne dans le temps (v0S1, v1S1, v2S1, v3S1, v0S2, v0S3) de la quantité de mouvement mesurée (aS1, aS2, aS3) d'une situation pour laquelle un moment de déclenchement de consigne ($t_z$) du dispositif de protection des passagers (15, 16) est connu, et
   - en fonction d'un signal d'activation de consigne (CRASHTRUE) pour indiquer le moment de déclenchement de consigne ($t_z$),

   et le signal d'activation de consigne (CRASHTRUE), lors de la production du contexte de déclenchement (30) dans un intervalle de temps d'entraînement spécial ($\tau_{special}$) avant le moment de déclenchement de consigne ($t_z$) du dispositif de protection des passagers (15, 16), environ au moment de déclenchement de consigne ($t_z$) du dispositif de protection des passagers (15, 16), ou après le moment de déclenchement de consigne ($t_z$) du dispositif de protection des passagers (15, 16), étant remplacé par une valeur d'entraînement spécial (TRAINVALUE).

4. Procédé selon la revendication 3, **caractérisé en ce que** le signal d'activation de consigne (CRASHTRUE), lors de la production du contexte de déclenchement (30) dans l'intervalle de temps d'entraînement spécial ($\tau_{special}$) avant le moment de déclenchement de consigne ($t_z$) du dispositif de protection des passagers (15, 16), est remplacé par la valeur d'entraînement spécial (TRAINVALUE).

**5.** Procédé selon la revendication 3 ou 4, **caractérisé en ce que** la valeur d'entraînement spécial (TRAINVALUE) se situe entre une valeur du signal d'activation de consigne (CRASHTRUE) avant le moment de déclenchement de consigne ($t_z$) et une valeur du signal d'activation de consigne (CRASHTRUE) après le moment de déclenchement de consigne ($t_z$).

**6.** Procédé selon la revendication 3, 4 ou 5, **caractérisé en ce que** la valeur d'entraînement spécial (TRAINVALUE) est variable dans le temps.

**7.** Procédé selon l'une des revendications précédentes, **caractérisé en ce que** l'intervalle de temps de suspension d'entraînement ($\tau_{hole}$) ou l'intervalle de temps d'entraînement spécial ($\tau_{special}$) est d'une longueur comprise entre 1 ms et 40 ms.

**8.** Procédé selon la revendication 7, **caractérisé en ce que** l'intervalle de temps de suspension d'entraînement ($\tau_{hole}$) ou l'intervalle de temps d'entraînement spécial ($\tau_{special}$) est d'une longueur comprise entre 2 ms et 10 ms.

**9.** Procédé selon la revendication 8, **caractérisé en ce que** l'intervalle de temps de suspension d'entraînement ($\tau_{hole}$) ou l'intervalle de temps d'entraînement spécial ($\tau_{special}$) est d'une longueur d'environ 5 ms.

**10.** Procédé de fabrication d'un véhicule automobile (1), **caractérisé en ce qu'**au moins un détecteur de collision (S1, S2, S3) pour mesurer la quantité de mouvement (aS1, aS2, aS3) et un dispositif de protection des passagers (15, 16) sont mis en place dans le véhicule automobile (1), et **en ce que** l'on implémente un contexte de déclenchement (30) selon un procédé selon l'une des revendications précédentes pour le déclenchement du dispositif de protection des passagers (15, 16) dans le véhicule automobile (1).

S2  S3  6   5   2                    1

Fig. 1

                                        2

| S2 |  aS2  |
| S3 |  aS3  |
        S1  aS1
|  10  |  AIR  |  15  |

| 11 |  MGURT  |
| 12 |  MSITZ  |
| 14 |  EINAUS  |

GURT  16

Fig. 2

Fig. 3

Fig. 4

Fig. 5

Fig. 6

Fig. 7

Fig. 8

Fig. 9

Fig. 10

$$\int_{t-\tau_0}^{t} asl \cdot dt \left[ \frac{m}{s} \right]$$

$\tau_{hole}$

0,2

0,1

0

0

0,02

$t_z$

0,04

t [s]

Fig. 11

CRASHTRUE

$\tau_{hole}$

1

0

0

0,02

$t_z$

0,04

t [s]

Fig. 12

25

$$\int_{t-\tau_0}^{t} as1 \cdot dt \left[ \frac{m}{s} \right]$$

0,2

0,1

0

0    0,02    $t_z$    0,04

t [s]

Fig. 13

CRASHTRUE

1

'egal'

0

0    $t_z - \tau_{hole}$    $t_z$    0,04
     0,02

t [s]

Fig. 14

CRASHTRUE

Fig. 15

CRASHTRUE          TRAINVALUE

Fig. 16

CRASHTRUE       TRAINVALUE

1

0

0                    $t_z - \tau_{special}$        $t_z$                    0,04
                     0,02

t [s]

Fig. 17

CRASHTRUE       TRAINVALUE

1

0

0                    $t_z - \tau_{special}$        $t_z$                    0,04
                     0,02

t [s]

Fig. 18

Fig. 19

Fig. 20

Fig. 21

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20020188393 A1
- US 5583771 A
- US 5684701 A
- US 6532508 B1
- DE 19854380 A1

- DE 10035505 A1
- DE 10040111 A1
- DE 10103661 C1
- DE 10016142 A1

### In der Beschreibung aufgeführte Nicht-Patentliteratur

- **TAYLOR, M. ; LISBOA, ELLIS HORWOOD.** Techniques And Application Of Neural Networks. 1993

- **CAUDILL, M. ; BUTLER, G.** Naturally Intelligent Systems. MIT Press, 1990
- **KUNG, S. Y.** Digital Neural Networks. PTR Prentice Hall, 1993